# EUROPEAN PATENT APPLICATION

(11) **EP 4 152 697 A1**
(43) Date of publication of application: **22.03.2023**
(21) Application number: 20942898.6
(22) Date of filing: 28.07.2020
(51) Int. Cl.: H04L 12/28, H04W 48/08, H04W 76/11

(54) **NETWORK CONFIGURATION METHOD, STORAGE MEDIUM, HOUSEHOLD APPLIANCE, CLIENT, AND NETWORK CONFIGURATION SYSTEM**

(30) Priority: 29.06.2020 CN 202010606114
(71) Applicant: GD Midea Air-Conditioning Equipment Co., Ltd., Foshan, Guangdong 528311 (CN)
(72) Inventor: YAN, Lin, Foshan, Guangdong 528311 (CN)
(74) Representative: Whitlock, Holly Elizabeth Ann
(86) International application number: PCT/CN2020/105135
(87) International publication number: WO 2022/000666

(57) **Abstract**

A network configuration method, a storage medium, a household appliance (100), a client (200), and a network configuration system. The network configuration method comprises the following steps: controlling a household appliance (100) to start a network configuration mode and a network monitoring mode; establishing a monitoring link between the household appliance (100) and a client (200) according to the network monitoring mode; receiving network configuration information of the client (200), and performing network configuration and connection on the household appliance (100) according to the network configuration information and the network configuration mode; and monitoring the network configuration and connection process to obtain network configuration monitoring information, and sending the network configuration monitoring information to the client (200) by means of the monitoring link.

## Description

### CROSS-REFERENCE TO RELATED APPLICATION

This application claims priority to Chinese Patent Application No. 202010606114.6, entitled "NETWORK CONFIGURATION METHOD, STORAGE MEDIUM, HOUSEHOLD APPLIANCE, CLIENT, AND NETWORK CONFIGURATION SYSTEM" and filed by GD MIDEA AIR-CONDITIONING EQUIPMENT CO., LTD. on June 29, 2020, the entire disclosure of which is incorporated herein by reference.

### FIELD

The present disclosure relates to the technical field of home electrical devices, and more particularly, to a network configuration system, a storage medium, a household appliance, a client, and a network configuration system.

### BACKGROUND

In the related art, an introduction of a smart home concept and an introduction of the Internet of Things enable more and more household appliances to be connected through WiFi. A process of the network configuration of the household appliance is as follows.
1. Turn on a client;
2. Scan/Select a model of the household appliance;
3. Pop up a corresponding network configuration guidance;
4. Turn on Bluetooth and WLAN functions of a mobile phone;
5. Connect a target network configuration router;
6. Fill in user's home network configuration information;
7. Connect a Bluetooth of the household appliance; and
8. Complete the network configuration of the household appliance.

In the above process of the network configuration of the household appliance, each step of the network configuration may fail. After a WiFi module of the household appliance is switched to a network configuration mode, a subsequent process of the network configuration is not monitored, which results in an operation blind region. Thus, it is difficult for the user to determine which step is wrong at the first time, which may increase a network configuration time and reduce a network configuration success rate.

### SUMMARY

The present disclosure aims to solve at least one of the technical problems in the related art. To this end, the present disclosure provides a network configuration method for a household appliance. The network configuration method has a high network configuration efficiency and a high success rate.

The network configuration method for the household appliance includes: controlling the household appliance to start a network configuration mode and a network monitoring mode; establishing a monitoring link between the household appliance and a client based on the network monitoring mode; receiving network configuration information from the client; performing a network configuration connection of the household appliance based on the network configuration information and the network configuration mode; monitoring a process of the network configuration connection to obtain network configuration monitoring information; and transmitting the network configuration monitoring information to the client through the monitoring link.

Thus, the household appliance can simultaneously start the network configuration mode and the network monitoring mode. Thus, when the household appliance is switched to the network configuration mode for network configuration, a network login state of the household appliance can be transmitted in real time through the monitoring link established between the client and a WiFi module, which can eliminate an operation blind region in a process of the network configuration of the household appliance. Therefore, a user can obtain the network configuration state conveniently, and adjust the network configuration information in time. Thus, it is possible to improve a network configuration efficiency and a network configuration success rate of the household appliance.

A computer-readable storage medium has a network configuration program for a household appliance. The network configuration program, when executed by a processor, implements a network configuration method for the household appliance.

A network configuration apparatus for a household appliance includes a memory, a processor, and a network configuration program for the household appliance stored on the memory and executable on the processor. The network configuration program, when executed by the processor, implements the network configuration method for the household appliance according to the embodiments as described above.

A household appliance includes the WiFi module. The household appliance further includes a memory, a processor, and a network configuration program for the household appliance stored on the memory and executable on the processor. The network configuration program, when executed by the processor, implements a network configuration method for the household appliance.

A client includes a memory, a processor, and a network configuration program for a household appliance stored on the memory and executable on the processor. The network configuration program, when executed by the processor, implements the network configuration method for the household appliance according to the embodiments as described above.

A network configuration system for a household appliance includes the household appliance and a client. The household appliance is configured to start a network configuration mode and a network monitoring mode. The client is configured to establish a monitoring link with the household appliance based on the network monitoring mode, and transmit network configuration information to the household appliance. The household appliance is further configured to perform a network configuration connection based on the network configuration information and the network configuration mode, monitor a process of the network configuration connection to obtain network configuration monitoring information, and transmit the network configuration monitoring information to the client through the monitoring link.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the description of embodiments taken in conjunction with the accompanying drawings, in which:
FIG. 1 is a flowchart of a network configuration method for a household appliance according to an embodiment of the present disclosure;
FIG. 2 is a block diagram of a network configuration system according to an embodiment of the present disclosure; and
FIG. 3 is a block diagram of a household appliance according to an embodiment of the present disclosure.

### DETAILED DESCRIPTION OF THE EMBODIMENTS

Embodiments of the present disclosure will be described in detail below. The embodiments are illustrated in the accompanying drawings. Throughout the disclosure, same or similar elements, or elements having same or similar functions, are denoted by same or similar reference numerals. The embodiments described below with reference to the drawings are illustrative, and are merely intended to explain, rather than limiting, the present disclosure.

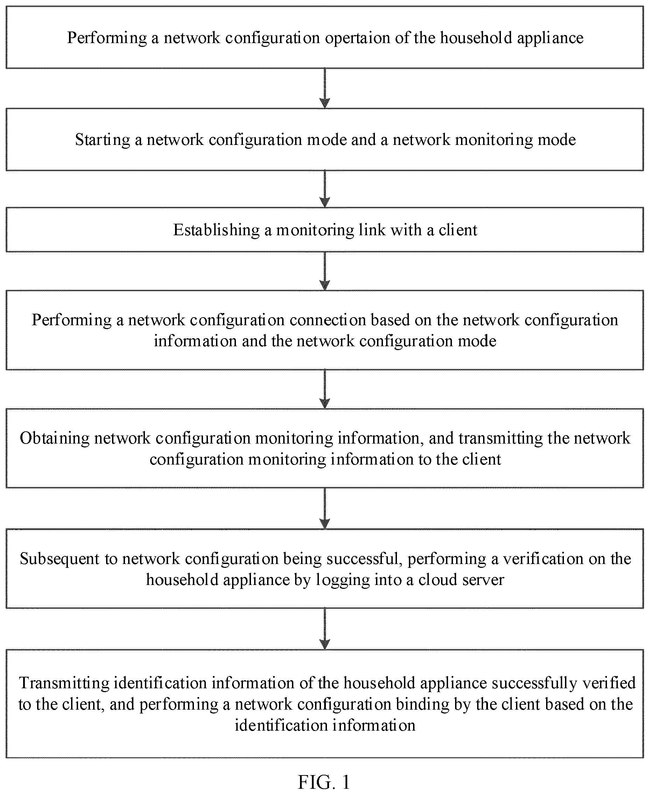

A network configuration method for a household appliance 100, a computer-readable storage medium, the household appliance 100, and a network configuration system 1000 for the household appliance 100 according to embodiments of the present disclosure will be described below with reference to FIG. 1 to FIG. 3.

As illustrated in FIG. 1, according to an embodiment of the present disclosure, the network configuration method for the household appliance 100 includes following operations.

A WiFi module 110 of the household appliance 100 is controlled to start a network configuration mode and a network monitoring mode.

In some embodiments, the household appliance 100 may be a household electrical device such as a television, a refrigerator, an air conditioner, etc. When the household appliance 100 performs a network configuration operation (i.e., a process of connecting the household appliance 100 to Internet), the WiFi module of the household appliance 100 can simultaneously start the network configuration mode and the network monitoring mode.

It should be noted that the network configuration mode refers to a mode in which the household appliance 100 is in a paging state, i.e., a state in which the household appliance 100 can identify a surrounding network at any time and prepare to log into a network at any time. The network monitoring mode refers to a mode in which a login network process of the household appliance 100 is monitored in real time during a network configuration of the household appliance 100. For example, once a login failure occurs during the login of the household appliance 100 to the network, the WiFi module 110 in the network monitoring mode may send a login failure prompt in real time to inform a user in time.

A monitoring link between the household appliance 100 and a client 200 is established based on the network monitoring mode. Network configuration information of the client 200 is received, and a network configuration connection for the household appliance 100 is performed based on the network configuration information and the network configuration mode. Further, a process of the network configuration connection is monitored to obtain network configuration monitoring information, and the network configuration monitoring information is transmitted to the client 200 through the monitoring link.

That is, after the WiFi module 110 of the household appliance 100 enters the network configuration mode based on a user instruction or automatically, the monitoring link is established between the client 200 and the household appliance 100. Further, after the household appliance 100 enters the network configuration mode, a process of the network configuration connection is monitored through the monitoring link, and the network configuration monitoring information is transmitted to the client 200 through the monitoring link. Therefore, there is no operation blind region for the WiFi module 110 in the process of the network configuration, and the WiFi module 110 can be monitored in real time. Meanwhile, the network configuration information can be transmitted to a user of the household appliance through the client 200.

Thus, the WiFi module 110 can perform the network configuration connection based on the network configuration information, monitor the process of the network configuration connection to obtain the network configuration monitoring information, and transmit the network configuration monitoring information to the client 200 through the monitoring link.

That is, the WiFi module 110 may log into the network based on the network configuration information. In a login process of the WiFi module 110, the WiFi module 110 can monitor a login state in real time to transmit a login result to the client 200 in a form of the network configuration monitoring information in real time in the login process.

Further, after a network configuration connection is successful, the WiFi module 110 performs a verification by logging into a cloud server. After the verification is successful, identification information of the household appliance 100 is transmitted to the client 200, to enable the client 200 to perform network configuration binding with the household appliance 100 based on the identification information of the household appliance 100.

As described above, for the home appliance 100 performing the network configuration based on the network configuration method of the present disclosure, in the process of the network configuration, the WiFi module 110 can monitor the network login state in real time and transmit the network login state to the client 200 through the network configuration monitoring information. Therefore, the user can easily obtain the login state in real time. Meanwhile, after the WiFi module 110 logs in successfully, the household appliance 100 is verified by the cloud server. After the verification succeeds, the household appliance 100 is controlled to be in the network configuration binding with the client 200.

According to embodiments of the present disclosure, the network configuration method for the household appliance 100 enables the household appliance 100 to simultaneously start the network configuration mode and the network monitoring mode. When the household appliance 100 is switched to the network configuration mode for the network configuration, a network login state of the household appliance 100 may be transmitted in real time through the monitoring link established between the client 200 and the WiFi module 110, which can eliminate the operation blind region in the process of the network configuration of the household appliance. Therefore, the user can obtain the network configuration state conveniently, and adjust the network configuration information in time. Thus, it is possible to improve a network configuration efficiency and a network configuration success rate of the household appliance 100.

According to some embodiments of the present disclosure, during monitoring of the process of the network configuration connection, in response to an abnormality of the network configuration connection being monitored, the abnormality of the network configuration connection is transmitted to the client 200 through the monitoring link, to send corresponding prompt operation information by the client 200.

In some embodiments, the abnormality of the network configuration connection includes one or more of weak signal strength of a router, a searching failure of an account number, and a wrong password of the router.

Comparison table of abnormality of network configuration connection and corresponding prompt operation information

| Abnormality of network configuration connection | Corresponding prompt operation information |
|---|---|
| When a device is attempted to be added to a local area network, the device is not found by scanning the local area network | 1. No device in the current local area network |
| | 2. AP isolation is set for the router (turn off the AP isolation) |
| | 3. A broadcasting restriction is set for the router (turn off the broadcasting restriction) |
| A mobile phone is not switched to a target WiFi of the network configuration | 1. WiFi connected by the current mobile phone is inconsistent with the target WiFi of the network configuration |
| A return-connection to the router fails due to wrong password | Check routing password used in the process of the network configuration |
| | An APP is notified to cancel a password setting |
| No SSID is found during the Bluetooth network configuration | Hotspot of the device turns on SSID again |
| Fail to establish TCP with a server during the Bluetooth network configuration | Re-establish TCP link |
| A target Bluetooth peripheral is not discovered within a timeout period during the Bluetooth network configuration | 1. Enhance hotspot signal strength of the device |
| | 2. Turn on the hotspot of the device to make discoverable |
| Fail to obtain a license during second-generation Bluetooth network configuration | Second-generation Bluetooth protocol, key negotiation, cloud interface acquisition fails, or the license return empty (the cloud does not have a license corresponding to MAC), if the interface is abnormal, return an error code of interface abnormity |
| WiFi module channel is switched | Switch mobile phone channel |
| WiFi module encryption mode is updated | Switch mobile phone encryption mode |
| WiFi module channel is in an automatic mode | Full channel scan |
| Reconnection to home route is timeout | Prompt a home routing guide page for manually connecting to home route |
| A hotspot of a device for network configuration does not conform to a hotspot format | 1. The device uses a new hotspot format, but does not invoke an interface of the SDK to set the hotspot format, a format supported by the SDK by default is a character string with the prefix MIDEA |
| No connection to AP hotspot of the device is established | 1. No TCP connection is established between the mobile phone and the device |
| | 2. The established TCP connection is abnormally disconnected due to a change in network environment |
| | 3. AP hotspot is unstable |

Referring to the above table, when the abnormality of the network configuration connection occurs, operations may be performed by the user based on a corresponding operation combination instruction at the client 200. Therefore, the network configuration connection of the household appliance 100 is simpler and more convenient to improve use convenience and the network configuration efficiency.

It can be understood that the network configuration information includes an account number and a password of the router. After obtaining the network configuration information, the WiFi module 110 of the household appliance 100 can automatically log into network where the router is located.

Performing the network configuration connection of the household appliance 100 based on the network configuration information and the network configuration mode includes: performing an initial verification of the account number and the password of the router; feeding a result of the initial verification back to the client 200 through the monitoring link; and after the initial verification is completed, connecting the household appliance 100 to the router based on the network configuration mode and the account number and the password of the router.

That is, during the login of the WiFi module 110 of the household appliance 100 to the network, the initial verification of the network configuration information is performed first, and the result of the verification, for example whether the account number or the password is correct, is feedback to the client 200. The result of the verification is then displayed on the client 200 in real time. Therefore, the user can conveniently alter the network configuration information in real time when the network configuration information is wrong. In addition, after the initial verification is completed by the WiFi module 110 (i.e., after both the account number and the password are verified to be correct), the WiFi module 110 logs into the network where the router is located.

In this way, during the login of the household appliance 100 into the network, once the network configuration information fails, the user can make an adjustment in time. Thus, it is possible to effectively improve the network configuration efficiency while improving the use convenience.

Further, after the network configuration connection is completed, a verification is further performed on the household appliance 100 by logging into the cloud server 300. Then, identification information of the household appliance 100 successfully verified is transmitted to the client 200, to allow the client 200 to perform the network configuration binding with the household appliance 100 based on the identification information of the household appliance 100.

That is, after successfully verified by the cloud server, the WiFi module 110 can obtain a network configuration random number, and perform a feedback after broadcasting information transmitted from the client 200 is received, to transmit the network configuration random number and the identification information of the household appliance 100 to the client 200.

After being verified by the cloud server, the WiFi module 110 can generate the network configuration random number. Meanwhile, after the broadcasting information from the client 200 is received, the WiFi module 110 performs data interaction with the client 200, and transmits the network configuration random number and the identification information to the client 200.

Further, after receiving the identification information of the household appliance 100 and the network configuration random number, the client 200 disconnects the monitoring link with the WiFi module 110 and switches to a router link, and transmits the network configuration random number and the identification information of the household appliance 100 to the cloud server through the router link, to complete the network configuration binding with the household appliance 100 through the cloud server.

In this way, the network configuration mode and data transmission of the network configuration random number are implemented between the client 200 and the household appliance 100 in a broadcasting mode, and the network configuration binding between the household appliance 100 and the client 200 is implemented by the cloud server. When the client 200 and the household appliance 100 are not logged into a same network, data interaction is implemented in the broadcasting mode. Therefore, data interactions between the household appliance 100 and the client 200, between the client 200 and the cloud server, and between the cloud server and the household appliance 100 are more reasonable, to improve the network configuration efficiency.

It should be noted that a mobile terminal (an intelligent device such as a mobile phone, a PAD), after being installed with an application program corresponding to the household appliance 100, becomes the client 200; or a remote controller of the household appliance 100 severs as the client 200. Each household appliance 100 may correspond to a plurality of clients 200. Each client 200 may also correspond to a plurality of household appliances 100.

Here, the network configuration mode is an STA (Spike-triggered average) mode, and the network monitoring mode is an AP (Access Point) mode or a Bluetooth mode.

That is, the WiFi module performs the paging and the network login in a form of a wireless network card, and receives a broadcast and performs the data interaction with the client 200 in the Bluetooth mode or the AP mode.

According to embodiments of the present disclosure, the network configuration method for the household appliance 100 includes: after the household appliance 100 starts the network configuration mode and the network monitoring mode, establishing, by the client 200, the monitoring link with the household appliance 100 based on the network monitoring mode; obtaining, by the client 200, network configuration information, and transmitting the network configuration information to the household appliance 100, to allow the household appliance 100 to perform the network configuration connection based on the network configuration information and the network configuration mode, and to allow the household appliance 100 to monitor a process of the network configuration connection to obtain network configuration monitoring information; and receiving, by the client 200 through the monitoring link, the network configuration monitoring information transmitted by the household appliance 100.

Here, the client 200 is configured to: in response to receiving the abnormality of the network configuration connection transmitted by the household appliance 100 through the monitoring link, send corresponding prompt operation information based on the abnormality of the network configuration connection.

That is, during the network configuration connection of the household appliance 100, the household appliance 100 is capable of starting the network configuration mode and the network monitoring mode. Real-time transmission of the network monitoring information between the client 200 and the household appliance 100 is implemented through the monitoring link. Thus, it is possible to avoid the monitoring blind region during the network configuration, facilitate the network configuration operation, and improve the network configuration efficiency.

A computer-readable storage medium according to embodiments of the present disclosure has a network configuration program for a household appliance 100. The network configuration program, when executed by a processor, implements a network configuration method for the household appliance 100.

According to the embodiments of the present disclosure, the computer-readable storage medium can improve network configuration efficiency of the household appliance 100 and use experience of the household appliance 100 by executing a network configuration program corresponding to the above network configuration method for the household appliance 100.

The present disclosure further provides a network configuration apparatus for a household appliance 100. The network configuration apparatus includes a memory, a processor, and a network configuration program for the household appliance 100 stored on the memory and executable on the processor. The network configuration program, when executed by the processor, implements the network configuration method for the household appliance 100 as described in the above embodiments.

Therefore, the network configuration apparatus according to the embodiments of the present disclosure can be disposed in any household appliance 100 to monitor the process of the network configuration of the household appliance 100 through an interaction between the network configuration apparatus and a client 200. Thus, it is possible to improve an intelligence degree of the household appliance 100 as well as a success rate and efficiency of network configuration.

The present disclosure further provides a household appliance 100 including a WiFi module 110. The household appliance 100 further includes a memory, a processor, and a network configuration program for the household appliance 100 stored on the memory and executable on the processor. The processor, when executing the network configuration program, implements the network configuration method for the household appliance 100. The household appliance 100 has the same technical effect as the network configuration apparatus, and the description thereof in detail will be omitted herein.

The present disclosure further provides a client 200. The client 200 includes a memory, a processor, and a network configuration program for a household appliance 100 stored on the memory and executable on the processor. The network configuration program, when executed by the processor, implements the network configuration method for the household appliance 100 as described in the above embodiments.

The present disclosure further provides a network configuration system for a household appliance 100. The network configuration system includes the household appliance 100 and a client 200. The household appliance 100 is configured to start a network configuration mode and a network monitoring mode. The client 200 is configured to establish a monitoring link with the household appliance 100 based on the network monitoring mode, and transmit network configuration information to the household appliance 100. The household appliance 100 is further configured to perform a network configuration connection based on the network configuration information and the network configuration mode, monitor a process of the network configuration connection to obtain network configuration monitoring information, and transmit the network configuration monitoring information to the client 200 through the monitoring link.

In the network configuration system according to the embodiments of present disclosure, the household appliance 100 is connected to a router based on the network configuration information provided by the client 200 (for example, an account number and a password of a router to be logged in). during the network configuration connection, the network configuration monitoring information is provided to the client 200. The client 200 can provide a corresponding operation instruction based on the network configuration monitoring information to allow the whole process of the network configuration to be monitored. Further, even a fault occurs, it is possible to handle the fault accurately. Thus, the network configuration efficiency can be improved.

According to the embodiments of the present disclosure, a computer-readable storage medium has a network configuration program for a household appliance 100. The network configuration program, when executed by the processor 130, implements the network configuration method for the household appliance 100.

With the computer-readable storage medium according to the embodiments of the present disclosure, it is possible to improve the network configuration efficiency and the network configuration success rate of the household appliance 100 by executing the network configuration program corresponding to the network configuration method for the household appliance 100 stored on the computer-readable storage medium.

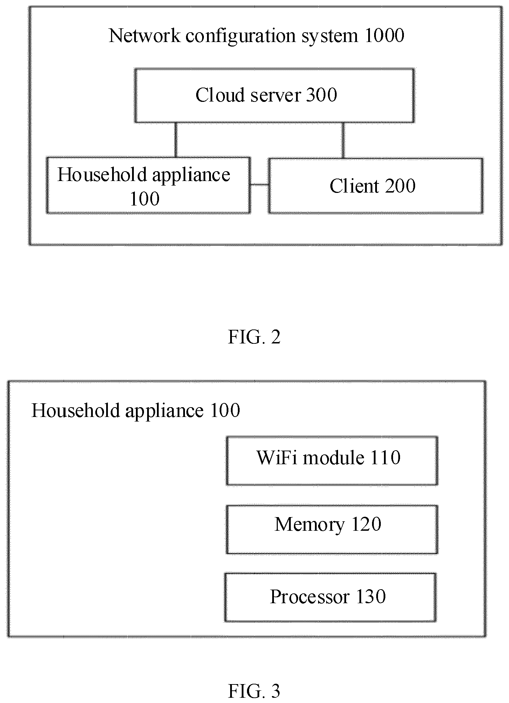

As illustrated in FIG. 3, the present disclosure further provides a household appliance 100 including a WiFi module 110, a memory 120, a processor 130, and a network configuration program for the household appliance 100. The network configuration program is stored on the memory 120 and executable on the processor 130. The network configuration program, when executed by the processor 130, implements the network configuration method for the household appliance 100.

Here, the memory 120 has the network configuration program stored thereon. The processor 130 is adapted to execute the network configuration program to enable the WiFi module 110 to enter the network monitoring mode while switching to the network configuration mode. Thus, during the network connection of the WiFi module 110, it is possible for a network login state of the WiFi module 110 to be the transmitted to the client 200 in real time in a form of network configuration monitoring information, which is convenient for the user to obtain and adjust the network configuration information. In addition, it is possible to improve the network configuration success rate while improving the network configuration efficiency.

As illustrated in FIG. 2, the present disclosure further provides a network configuration system 1000 for a household appliance 100. The network configuration system 1000 includes the household appliance 100, a client 200, and a cloud server. The household appliance 100 includes a WiFi module 110.

The WiFi module 110 is configured to start a network configuration mode and a network monitoring mode when a network configuration operation is performed on the home appliance 100. The client 200 is configured to establish a monitoring link with the WiFi module 110 based on the network monitoring mode, and transmit network configuration information to the WiFi module 110 through the monitoring link.

That is, the WiFi module 110 is configured to: after entering the network configuration mode based on a user instruction or automatically, establish the monitoring link between the client 200 and the household appliance 100, and monitor a process of the network configuration through the monitoring link after the household appliance 100 is in the network configuration mode. Therefore, there is no operation blind region for the WiFi module 110 in the process of the network configuration, and the process of the network configuration can be monitored in real time. Meanwhile, the network configuration information can be transmitted to a user of the household appliance by the client 200.

Thus, the WiFi module 110 is capable of performing the network configuration connection based on the network configuration information and the network configuration mode, monitoring the network configuration connection process to obtain the network configuration monitoring information, and transmitting the network configuration monitoring information to the client 200 through the monitoring link.

Further, after the network configuration connection succeeds, a verification is performed through logging into the cloud server by the WiFi module 110. Then, identification information of the household appliance 100 successfully verified is transmitted to the client 200. The client 200 performs a network configuration binding with the household appliance 100 based on the identification information of the household appliance 100.

With the network configuration system 1000 for the household appliance 100 according to the embodiments of the present disclosure, it is possible for the WiFi module 110 to start the network configuration mode and the network monitoring mode simultaneously. Thus, when the household appliance 100 is switched to the network configuration mode for the network configuration, a network login state of the household appliance 100 can be transmitted in real time through the monitoring link established between the client 200 and the WiFi module 110, which can eliminate the operation blind region for the household appliance 100 in the process of the network configuration. Therefore, the user can obtain the network configuration state conveniently to adjust the network configuration information in time. Thus, it is possible to improve the network configuration efficiency and the network configuration success rate of the household appliance 100.

It can be understood that the network configuration information includes an account number and a password of a router. After obtaining the network configuration information, the WiFi module 110 of the household appliance 100 can automatically log into network where the router is located.

Here, the WiFi module 110 performing the network configuration connection based on the network configuration information and the network configuration mode includes: performing an initial verification of the account number and the password of the router by the WiFi module 110; and feeding a result of the initial verification back to the client 200 through the monitoring link; and after the initial verification is completed by the WiFi module 110, performing a connection to the router based on the network configuration mode and the account number and the password of the router.

That is, during the login of the WiFi module 110 to the network, the WiFi module 110 first performs the initial verification of the network configuration information, and feeds a result of the initial verification, for example whether the account number or the password is correct, back to the client 200. The result of the initial verification is then displayed on the client 200 in real time. Therefore, the user can conveniently alter the network configuration information in real time when the network configuration information is wrong. In addition, after the initial verification (i.e., after both the account number and the password are verified to be correct) is completed by the WiFi module 110, the WiFi module 110 logs into the network where the router is located.

In this way, during the login of the household appliance 100 into the network, once the network configuration information fails, the user can make an adjustment in time. Thus, it is possible to effectively improve the network configuration efficiency while improving the use convenience.

In some embodiments, after successfully verified through the cloud server, the WiFi module 110 can obtain a network configuration random number, and perform a feedback after receiving broadcasting information transmitted from the client 200, to transmit the network configuration random number and the identification information of the household appliance 100 to the client 200.

In a further embodiment, after verified by the cloud server, the WiFi module 110 can generate the network configuration random number. Meanwhile, after the broadcasting information from the client 200 is received, the WiFi module 110 performs data interaction with the client 200, and transmits the network configuration random number and the identification information to the client 200.

Further, after receiving the identification information of the household appliance 100 and the network configuration random number, the client 200 disconnects the monitoring link with the WiFi module 110 and switches to a router link, and transmits the network configuration random number and the identification information of the household appliance 100 to the cloud server through the router link, to complete the network configuration binding with the household appliance 100 through the cloud server.

In this way, the network configuration mode and data transmission of the network configuration random number are implemented between the client 200 and the household appliance 100 through a broadcasting mode, and the network configuration binding between the household appliance 100 and the client 200 is implemented through the cloud server. When the client 200 and the household appliance 100 do not log into a same network, data interaction is implemented through the broadcasting mode. Therefore, data interactions between the household appliance 100 and the client 200, between the client 200 and the cloud server, and between the cloud server and the household appliance 100 are more reasonable, to improve the network configuration efficiency.

It should be noted that mobile terminal (an intelligent device such as a mobile phone, a PAD) in which an application program corresponding to the household appliance 100 is installed sever as the client 200; or a remote controller of the household appliance 100 severs as the client 200. Each household appliance 100 may correspond to a plurality of clients 200. Each client 200 may also correspond to a plurality of household appliances 100.

Here, the network configuration mode is an STA (Spike-triggered average) mode, and the network monitoring mode is an AP (Access Point) mode or a Bluetooth mode.

That is, the WiFi module performs paging and network login in a form of a wireless network card, and receives a broadcast and performs the data interaction with the client 200 in the Bluetooth mode or the AP mode.

A control method for the household appliance 100 according to the present disclosure will be described below.

First, the household appliance 100 is controlled by a user through a client 200, a remote controller, or voice. When the household appliance 100 operates normally, the household appliance 100 automatically enters a network configuration mode after turned on. After the WiFi module 110 enters a network configuration mode, a network monitoring mode is started synchronously. Network configuration information is transmitted through a Bluetooth module, and a monitoring link is established between the client 200 and the WiFi module 110.

A model of the household appliance 100T is selected by the user on the client 200, and a network configuration guidance is popped up on the client 200. A network configuration operation is performed by the user at the client 200 based on the network configuration guidance (for example, the user fills in network router information in an environment where the user is located, including an account number and a password), to generate network configuration information. Meanwhile, a current page of the client 200 is switched by the user to enter a wireless network connection page, and the client 200 is connected to a Bluetooth of the household appliance 100 based on the network configuration guidance. After the connection is completed, a household appliance network configuration page of the client 200 is returned, and the network configuration information of the household appliance network configuration page of the client 200 is clicked and transmitted, and then message feedback of the network state is obtained. After obtaining the network configuration information transmitted by the client 200 through a Bluetooth interaction, the WiFi module 110 performs the initial verification, and feeds the result of the initial verification back to the client 200 through an AP link or a Bluetooth link to notify the user.

Further, after the initial verification is completed, an STA end of the WiFi module 110 performs a connection to a target router. During the connection, in an abnormal state where for example, a routing signal strength is weak, searching for an account number fails, a WiFi password or an encryption security type is wrong, the network configuration monitoring information is synchronized to the client 200 through the Bluetooth link to notify the user, and guide the user to perform effective network configuration operation to improve the network configuration success rate.

When the acquired network configuration information is correct, the WiFi module 110 is connected to the target router through the STA link. The WiFi module 110 logs into the cloud server 300 for the verification and identity authentication. After the authentication of the WiFi module 110 is successful, one network configuration random number is obtained. Based on a broadcasting message transmitted by the client 200, the network configuration random number is transmitted to the client 200 through the Bluetooth link together with network configuration random data and SN information of the household appliance 100. The client 200 performs the network configuration binding based on the distribution random number and disconnects the Bluetooth link with the household appliance, to complete the network configuration.

In the description of the present disclosure, it should be understood that, the orientation or position relationship indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation to the present disclosure.

In the description of the present disclosure, "first feature" and "second feature" may include one or more of the features.

In the description of the present disclosure, "plurality" means two or more.

In the description of the present disclosure, the first feature being "on" or "under" the second feature may include the scenarios that the first feature is in direct contact with the second feature, or the first and second features, instead of being in direct contact with each other, are in contact with each other through another feature therebetween.

In the description of the present disclosure, the first feature being "on", "above", and "over" the second feature may mean that the first feature is directly above or obliquely above the second feature, or simply mean that the level of the first feature is higher than that of the second feature.

In the description of this specification, descriptions with reference to the terms "an embodiment", "some embodiments", "illustrative embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present invention shall be defined by the claims and their equivalents.

## Claims

1. A network configuration method for a household appliance, the network configuration method comprising:
controlling the household appliance to start a network configuration mode and a network monitoring mode;
establishing a monitoring link between the household appliance and a client based on the network monitoring mode;
receiving network configuration information from the client;
performing a network configuration connection of the household appliance based on the network configuration information and the network configuration mode;
monitoring a process of the network configuration connection to obtain network configuration monitoring information; and
transmitting the network configuration monitoring information to the client through the monitoring link.

2. The network configuration method for the household appliance according to claim 1, wherein during monitoring of the process of the network configuration connection, in response to an abnormality of the network configuration connection being monitored, the abnormality of the network configuration connection is transmitted to the client through the monitoring link, to send corresponding prompt operation information by the client.

3. The network configuration method for the household appliance according to claim 2, wherein the abnormality of the network configuration connection comprises one or more of weak signal strength of a router, searching failure of an account number, and a wrong password of the router.

4. The network configuration method for the household appliance according to any one of claims 1 to 3, wherein:
the network configuration information comprises an account number and a password of a router; and
said performing the network configuration connection of the household appliance based on the network configuration information and the network configuration mode comprises:
performing an initial verification of the account number and the password of the router;
feeding a result of the initial verification back to the client through the monitoring link; and
connecting, subsequent to a completion of the initial verification, the household appliance to the router based on the network configuration mode and the account number and the password of the router.

5. The network configuration method for the household appliance according to any one of claims 1 to 3, wherein:
the network configuration mode comprises a spike-triggered average (STA) mode; and
the network monitoring mode comprises an access point (AP) mode or a Bluetooth mode.

6. The network configuration method for the household appliance according to any one of claims 1 to 3, wherein:
a verification is performed on the household appliance by logging into a cloud server subsequent to a completion of the network configuration connection; and
identification information of the household appliance successfully verified is transmitted to the client, to allow the client to perform a network configuration binding with the household appliance based on the identification information of the household appliance.

7. A network configuration method for a household appliance, the network configuration method comprising:
subsequent to the household appliance starting a network configuration mode and a network monitoring mode, establishing, by a client, a monitoring link with the household appliance based on the network monitoring mode;
obtaining, by the client, network configuration information, and transmitting the network configuration information to the household appliance, to allow the household appliance to perform a network configuration connection of the household appliance based on the network configuration information and the network configuration mode, and to allow the household appliance to monitor a process of the network configuration connection to obtain network configuration monitoring information; and
receiving, by the client through the monitoring link, the network configuration monitoring information transmitted by the household appliance.

8. The network configuration method for the household appliance according to claim 7, wherein the client is configured to: in response to receiving an abnormality of the network configuration connection transmitted by the household appliance through the monitoring link, send corresponding prompt operation information based on the abnormality of the network configuration connection.

9. A computer-readable storage medium, having a network configuration program for a household appliance, wherein the network configuration program, when executed by a processor, implements the network configuration method for the household appliance according to any one of claims 1 to 6 or the network configuration method for the household appliance according to claim 7 or 8.

10. A network configuration apparatus for a household appliance, the network configuration apparatus comprising:
a memory;
a processor; and
a network configuration program for the household appliance, the network configuration program being stored on the memory and executable on the processor,
wherein the network configuration program, when executed by the processor, implements the network configuration method for the household appliance according to any one of claims 1 to 6 or the network configuration method for the household appliance according to claim 7 or 8.

11. A household appliance, comprising:
a memory;
a processor; and
a network configuration program for the household appliance, the network configuration program being stored on the memory and executable on the processor,
wherein the network configuration program, when executed by the processor, implements the network configuration method for the household appliance according to any one of claims 1 to 6.

12. A client, comprising:
a memory;
a processor; and
a network configuration program for a household appliance, the network configuration program being stored on the memory and executable on the processor,
wherein the network configuration program, when executed by the processor, implements the network configuration method for the household appliance according to claim 7 or 8.

13. A network configuration system for a household appliance, the network configuration system comprising:
the household appliance; and
a client, wherein:
the household appliance is configured to start a network configuration mode and a network monitoring mode,
the client is configured to: establish a monitoring link with the household appliance based on the network monitoring mode; and transmit network configuration information to the household appliance,
the household appliance is further configured to: perform a network configuration connection based on the network configuration information and the network configuration mode; monitor a process of the network configuration connection to obtain network configuration monitoring information; and transmit the network configuration monitoring information to the client through the monitoring link.
